Europäisches Patentamt

**European Patent Office**

**Office européen des brevets**

(11) Publication number: **0 009 884**
A1

(12)

# EUROPEAN PATENT APPLICATION

(21) Application number: **79301792.2**

(22) Date of filing: **31.08.79**

(51) Int. Cl.³: **B 32 B 31/12**
**C 08 J 5/18, C 08 J 7/04**

(30) Priority: **01.09.78 US 939089**

(43) Date of publication of application:
**16.04.80 Bulletin 80/8**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Arbit, Harold Abraham**
**35 North Sixth Avenue Highland Park**
**New Jersey 08904 Middlesex(US)**

(74) Representative: **Cooper, John Anthony Mobil Court**
**3 Clements Inn**
**London WC2A 2EB(GB)**

(54) Process for preparing a flexible coated heat-sealable packaging film.

(57) Biaxially oriented polyacrylonitrile film is treated with
corona discharge and coated on one or both sides with olefin
polymer or copolymer by extrusion coating. The resultant
coated film has excellent flexibility as measured by the Gelbo
flex test. This film is readily heat sealed and is useful in pack-
aging application.

EP 0 009 884 A1

This invention relates to flexible polyacrylonitrile film coated on one or both sides with olefin polymer or co-polymer.

The present invention provides a corona discharge treated biaxially oriented polyacrylonitrile film extrusion coated on at least one side with an olefin polymer.

The present invention further provides a process for preparing a flexible coated film which comprises subjecting a biaxially oriented polyacrylonitrile film to corona discharge treatment on each side of the film to be coated and thereafter extrusion coating at least one side of the film with an olefin polymer.

In U.S. Patent No. 3,823,061, there is described a process for laminating at least two dissimilar films, such as polyacrylonitrile and polyolefin, wherein both films are treated with corona discharge and then passed together. This disclosure does not teach the present invention, in which only the polyacrylonitrile film is treated with corona discharge and then the other film is formed thereon by extrusion coating.

The biaxially oriented polyacrylonitrile film utilizable herein can be prepared by casting a film from a solution of polyacrylonitrile and biaxially stretching it, using known techniques. One procedure is described in U.S. Patent No. 3,437,717, to which reference is made. A particularly preferred technique is described in U.S. Patent No. 4,066,731, incorporated herein by reference.

Briefly, this technique involves pouring a hot, concentrated solution of polyacrylonitrile in a solvent that is water-soluble, e.g., dimethyl sulfoxide, onto a film supporting surface and stripping the resulting film from said surface. The resulting film containing solvent is subjected to contact with water, preferably under constrained conditions, thereby removing the solvent from the film and replacing it with water. The film composed essentially of acrylonitrile and water is then stretched to about 1.5 to about 4 times its original dimension in both the machine direction and the transverse direction. A suitable method is by use of the drafter-tenter frame arrangement (see U.S. Patent No. 3,437,717). While still under restrained conditions, the film is dried, thus producing biaxially oriented polyacrylonitrile contemplated for use in this invention. Such film is available commercially.

Preferably, the biaxially oriented film is prepared from polyacrylonitrile homopolymer. It is contemplated however, to use films made from co-polymers of acrylonitrile with other ethylenically unsaturated monomers, such as alkyl acrylates. Film thickness can be between about 1/4 mil and about 4 mils.

As indicated hereinbefore, the biaxially oriented polyacrylonitrile film is extrusion coated on one or both sides with an olefin polymer or co-polymer, such as low density polyethylene (LDPE). The preferred LDPE ranges in density from about 0.915 to 0.935 and has a melt index (M.I.) between about 1g/10 min. and about 15g/min. Although LDPE is preferred, other thermoplastic olefin polymers and co-polymers can be used. Such polymers and co-polymers include polypropylene, polybutene, ethylene-vinyl acetate,

ethylene-alkyl (meth) acrylate co-polymer such as ethylene-ethyl acrylate, and ionomers (Surlyn A). For the sake of brevity in this description, the olefinic polymers or co-polymers will be referred to as "olefin polymer".

Prior to extrusion coating the biaxially oriented polyacrylonitrile film with LDPE, the base film surface is subjected to corona discharge treatment on each side to be coated.

A feasible extrusion coating operation involves in-line corona discharge treating one surface of a biaxially oriented polyacrylonitrile base film prior to extrusion coating and subsequently laying down on the base film a film of olefin polymer from an extruder fitted with a suitable slot die. The coated assembly is then cooled, as by passing it between cooled nip rolls. Then, when both side coating is desired, the one-side coated film is turned over and the process is repeated by passing it through the aforedescribed operation to coat the other side of the base film with LDPE. An alternative operation involves in-line tandem extrusion coating both sides in a single pass.

In general, the melt temperature of the extruded LDPE will be about 300-650°F. Typical melt temperatures for other olefin polymers are EVA, 250-430°F.; EEAm 250°-600°F.; and ionomers, 300-550°F. The thickness of the olefin polymer film or coating can be between about 0.25 mil and about 2.0 mils and preferably about 0.5-1 mil.

## Example 1

Biaxially oriented polyacrylonitrile base film was passed horizontally through an LDPE extrusion coating line at a speed of 300 feet per minute. About 4 feet prior to the point where the LDPE coating was applied, the film surface was treated with corona discharge. The level of corona discharge treatment was 350 watts spread out over 32 inches at the line speed of 300 feet per minute. After corona discharge treatment, LDPE was applied to one side of the base film from an extruder equipped with a slot die and the resultant assembly was cooled. Then, the one-side coated base film was turned over and coated on the other side with LDPE, as aforedescribed.

Throughout the runs, the melt temperature of the LDPE was 580°F. In one run the LDPE coating on each side was 0.5 mil and in another it was 1 mil. The LDPE had a density of 0.917 and an M.I. of 6.5.

## GELBO FLEX TESTER

This instrument is used to simulate the flexing conditions imposed on water vapor barrier materials used in packaging and conforming to Specification MIL-B-131 D (ASTM F392-74).

The instrument consists of a 3-1/2" diameter stationary head and a 3-1/2" diameter movable head spaced at a distance of 7" face to face. Shoulders 1/2" wide on each head are used to support the test specimen. The motion of the movable head is controlled by a grooved, motor-device, reciprocating shaft with a stroke of 6" and a twisting motion of 400° in the first 3-1/2" of travel followed by a horizontal motion of 2-1/2".

0009884

The flexing speed is 40 cycles per minute, a full cycle consisting of one forward and one return stroke.

The films of Example 1 were tested on the Gelbo Flex Tester and in other ASTM film tests. The results and tests used are set forth in Table I. The Control was uncoated biaxially oriented poly-acrylonitrile base film.

TABLE 1

| TEST | METHOD | CONTROL | 2-SIDE LDPE COATED | |
| --- | --- | --- | --- | --- |
| | | | 0.5 mil/Side | 1 mil/Side |
| MODIFIED GELBO FLEX, Holes/150 sq. in. 30 cycles | Mil-B-131D Spec. 2.2" diam. 400° twist | 17 holes | 0 | 0 |
| 2400 cycles, M.D. | 3.5" diam. 440° twist | 200 holes | 23 holes | 17 holes |
| 2400 cycles, T.D. | " " " " | 200 holes | 2 tears 20 holes 7 tears | 2 tears 8 holes 2 tears |
| DART IMPACT F₅₀, gms at 24°C. | ASTM D-1709 | 37 | 129 | 295 |
| INSTRON TEAR, g/mil, M.D. T.D. | ASTM D-1004 | 490 413 | 222 369 | 213 271 |
| ELMENDORF TEAR, g/mil, M.D. T.D. | ASTM D-1922 | 15 12 | 11 18 | 14 20 |
| ADHESION, g/in T-Peel | ASTMD -1876 | Not Applicable | (1) Tear | (1) Tear |

(1) Could not separate without tearing film.

## Example 2

Using substantially the same techniques described in Example 1, biaxially oriented polyacrylonitrile base film was extrusion coated on one side only with LDPE and with other olefin polymers. The polymers used are set forth in Table II along with pertinent test data. The one-side LDPE coated film retained excellent $O_2$ barrier properties after 30 cycles of Gelbo flexing.

## TABLE II

| TEST | METHOD | CONTROL | EVA | SURLYN | EEA | LDPE |
|---|---|---|---|---|---|---|
| MODIFIED GELBO FLEX , 30 cycles 2.2" diam. head, 400° twist Holes/150 in$^2$ | SPECIFICATION MIL-B-131D | 17 | 7 | 3 | 1 | 0 |
| ELMENDORF TEAR, g/mil | ASTM D-1922 | | | | | |
| MD | | 15 | 11 | 35 | 49 | 7 |
| TD | | 12 | 17 | 26 | 62 | 26 |
| INSTRON TEAR, g/mil | ASTM D-1004 | | | | | |
| MD | | 490 | 316 | 302 | 270 | 404 |
| TD | | 413 | 829 | 539 | 867 | 400 |
| ADHESION, g/in. T-Peel | ASTM D-1876 | Not Applicable | 80 | Tears | 50 | 375 |

1. Process for preparing a flexible coated film characterized by subjecting a biaxially oriented polyacrylonitrile film to corona discharge treatment on each side of the film to be coated and thereafter extrusion coating at least one side of the film with an olefin polymer.

2. The process of Claim 1 characterized in that the polyacrylonitrile film is extrusion coated on one side with an olefin polymer.

3. The process of Claim 1 characterized in that the polyacrylonitrile film is extrusion coated on both sides with an olefin polymer.

4. The process of Claim 2 or 3 characterized in that the olefin polymer is low-density polyethylene.

5. The process of Claim 2 or 3 characterized in that the olefin polymer is ethylene-vinyl acetate co-polymer.

6. The process of Claim 2 or 3 characterized in that the olefin polymer is ethylene-ethyl acrylate co-polymer.

7. The process of Claim 2 or 3 characterized in that the olefin polymer is an ionomer.

0009884

# EUROPEAN SEARCH REPORT

European Patent Office

Application number

EP 79 30 1792

## DOCUMENTS CONSIDERED TO BE RELEVANT

| Category | Citation of document with indication, where appropriate, of relevant passages | Relevant to claim |
|---|---|---|
| X | US - A - 3 453 173 (THE STANDARD OIL COMPANY) <br> * Claims; column 3, lines 13-15; 19-25; column 1, lines 58-72 * | 1-7 |
| | FR - A - 2 263 092 (MOLECULAR DESIGN INCORPORATION) <br> * Claims * | 1 |
| | GB - A - 816 024 (DU PONT DE NEMOURS) <br> * Page 1, line 70; page 2, line 45; claims * | 1 |
| | GB - A - 1 214 325 (MONSANTO) <br> * Claims; page 1, lines 36-45; 53-60; page 2, lines 14-19 * | 1 |

CLASSIFICATION OF THE APPLICATION (Int. Cl. 3)

B 32 B 31/12
C 08 J 5/18
7/04

TECHNICAL FIELDS
SEARCHED (Int.Cl. 3)

C 08 J 5/18
7/04
B 32 B 31/12

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-12-1979 | VAN GOETHEM |

EPO Form 1503.1  06.78